Europäisches Patentamt

European Patent Office

Office européen des brevets

(19)

(11) · Numéro de publication: **0130113 B1**

(12)

# FASCICULE DE BREVET EUROPEEN

(45) Date de publication du fascicule du brevet: **19.11.87**

(51) Int. Cl.⁴: $H\ 01\ G\ 4/20$

(21) Numéro de dépôt: **84401250.0**

(22) Date de dépôt: **18.06.84**

(54) **Film métallisé pour la réalisation de condensateurs, et procédé de fabrication desdits condensateurs.**

(30) Priorité: **28.06.83 FR 8310681**

(43) Date de publication de la demande:
**02.01.85 Bulletin 85/1**

(45) Mention de la délivrance du brevet:
**19.11.87 Bulletin 87/47**

(84) Etats contractants désignés:
**BE DE FR IT SE**

(56) Documents cités:
**DE - A - 1 439 324**
**FR - A - 1 286 559**
**FR - A - 2 011 633**
**US - A - 3 214 657**
**US - A - 3 419 770**

(73) Titulaire: **COMPAGNIE EUROPEENNE DE COMPOSANTS ELECTRONIQUES LCC, 50, rue Jean -Pierre Timbaud B.P. 301, F-92402 Courbevoie (FR)**

(72) Inventeur: **Bernard, Daniel, THOMPSON-CSF SCPI 173, bld Haussmann, F-75379 Paris Cedex 08 (FR)**
Inventeur: **Dubois, Jean-Claude, THOMPSON-CSF SCPi 173, bld Haussmann, F-75379 Paris Cedex 08 (FR)**

(74) Mandataire: **Vesin, Jacques et al, THOMSON-CSF SCPI 173, Bld Haussmann, F-75379 Paris Cedex 08 (FR)**

## Description

La présente invention concerne un film métallisé pour la réalisation de condensateurs ainsi qu'un procédé pour la réalisation de condensateurs à partir de ce film.

Les condensateurs à base de film souple diélectrique métallisé sont généralement réalisés par bobinage de condensateurs individuels ou par empilement desdits films métallisés de manière a réaliser un condensateur-mère puis à découper lesdits condensateurs-mères en condensateurs individuels. Différentes techniques connues de réalisation de ces condensateurs sont décrites par exemple dans les brevets français 879 280, 1 051 464, 1 051 465, 903 040 et 2 011 553. Le bobinage ou l'empilement de film de matière plastique métallisé s'effectue généralement par superposition de deux films diélectriques métallisés possédant l'un une marge non métallisée sur l'une de ses bordures et l'autre une marge non métallisée sur l'autre bordure. De cette manière, on peut ensuite par schoopage des flancs latéraux desdits condensateurs relier sur l'un des flancs les couches métallisées ou électrodes de rang pair et sur l'autre flanc les couches métallisées ou électrodes de rang impair.

Bien que cette technique soit avantageuse, on constate un certain nombre d'inconvénients liés à la présence d'air entre les couches ainsi empilées. Dans le cas de condensateurs bobinés, les couches d'air présentes dans le condensateur modifient la capacité de celui-ci d'une manière difficilement contrôlable et nécessite la diminution de vitesses de bobinage pour obtenir une valeur précise de capacité. Dans le cas de condensateurs du type empilé obtenu par découpage à partir d'un condensateur-mère, on constate une absence d'homogénéité desdits condensateurs-mères, ceux situés sous l'empilement étant plus compactes que ceux situés au sommet de l'empilement, ce qui entraîne également une variation de capacité par éléments de volume. Pour remédier à cet inconvénient, on a proposé dans le brevet US 3 214 657 de recouvrir les métallisations d'une couche d'un matériau plastique thermiquement collable.

D'autre part, il est connu par le brevet français n° 1 286 559 de réaliser des condensateurs autorégénérants de grande capacité en remplaçant le film de matière plastique usuel, tel qu'un film en polyester, polycarbonate, etc. par une couche de laque. De manière plus spécifique, le brevet français n° 1 286 559 décrit un procédé de fabrication d'un condensateur autorégénérant selon lequel on dépose d'abord une première couche de laque sur une feuille support détachable appropriée, on munit la couche de laque d'un placage métallique profilé et on dépose des bandes de laques sur le placage, les profils du placage et des bandes de laques étant tels que, par pliage le long de la ligne médiane du placage métallique, on obtienne une feuille à six couches dont les couches métalliques sont reliées entre elles de façon à assurer le passage du courant.

La présente invention concerne un nouveau film métallisé utilisant des couches de laque pour remédier aux inconvénients dus à la présence d'air rencontrés avec les films diélectriques usuels. Dans ce but, le film métallisé selon l'invention est constitué d'un seil folm diélectrique souple comportant des bandes parallèles métallisées uniformes partiellement recouvertes de bandes de laque parallèles aux précédentes, deux bandes métallisées successives étant recouvertes partiellement par une couche de laque, tandis que deux bandes de laque successives recouvrent partiellement une même bande métallisée. De préférence, les bandes de laque seront disposées symétriquement par rapport au plan médian des bandes métallisées.

La présence de laque, en effet, permet au cours du traitement thermique qui suit la réalisation du condensateur de provoquer une adhésion de la couche de laque sur la couche diélectrique immédiatement supérieure ce qui permet d'éliminer de manière améliorée l'air présent dans lesdits condensateurs.

De préférence, le film métallisé selon l'invention comportera des couches métallisées recouvertes de couches de laque sur les deux faces du film diélectrique souple. Les bandes métallisées sur l'une des faces du film seront latéralement décalées par rapport à celles de l'autre face du film et de préférence disposées symétriquement par rapport au plan médian perpendiculaire à chaque bande métallisée de l'autre face du film. La solution préférentielle du film selon l'invention est réalisée lorsque les bandes de laque sur l'une des faces du film sont disposées symétriquement par rapport au plan médian perpendiculaire à chaque bande de laque de l'autre face du film tandis que le plan médian d'une couche de laque sur l'une des faces du film est le même que celui d'une couche métallisée disposée sur l'autre face.

Dans ce dernier cas, on obtient un film métallisé laqué sur les deux faces qui peut être directement utilisé par empilement sur lui-même. Cet empilement peut s'effectuer de différentes manières connues telles que citées dans les brevets français mentionnés ci-dessus. Suivant le type d'empilement choisi, le découpage en condensateurs individuels le long des plans médians mentionnés plus haut peut s'effectuer avant ou après empilement.

Comme laque diélectrique, on utilisera tout polymère en solution ou sous forme de suspension ou émulsion dans un solvant, ayant de bonnes propriétés diélectriques pour la réalisation de condensateurs. On peut citer à titre d'exemple les solutions de polymères tels que le polycarbonate, le polysulfone, le polystyrène, le polyfluorure de vinylidène et leurs copolymères et d'une manière générale les polyoléfines. Tous ces polymères ont des caractéristiques diélectriques stables en température. Les solvanta préférés sont le dichlorométhane, le chlorobenzène, la diméthyl formamide, la méthylétylcétone ou le dichloroéthane. L'épaisseur de laque déposée doit être au moins de l'ordre de 0,7 microns de manière à éviter les absences de laque par endroit. Une épaisseur de l'ordre du micron donne de bons résultats. L'homogénéité du dépôt de laque est améliorée par la présence d'agents tensio-actifs. Une quantité de l'ordre de 1% en poids de laque s'avère satisfaisante en pratique. On utilisera les procédés d'enduction bien connus pour déposer cette laque sur le film diélectrique support. Dans certains cas, on pourra, pour améliorer l'accrochage de la laque sur le support diélectrique, faire subir, par exemple, un traitement «d'ancrage» à celui-ci.

L'enduction de la couche de laque doit cependant s'effectuer dans des conditions particulières. On a en effet constaté que les solvants résiduels dans la couche de laque avaient une influence considérable sur la résistance d'isolement des condensateurs fabriqués à l'aide de ces films: il est en effet nécessaire d'avoir des traces de solvants dans la couche de laque par assurer un collage desdites couches l'une sur l'autre. Toutefois, on a constaté de manière inattendue, qu'un excès de solvants résiduels dans cette couche se traduisait par des résistances d'isolement trop basses. Après des recherches difficiles, la Demanderesse pense qu'un taux de solvant résiduel compris entre 10 et 500 ppm par rapport au poids du diélectrique contenu dans la laque, permettait à la fois d'obtenir un condensateur dans lequel l'air après traitement thermique a été pratiquement totalement éliminé, quel que soit la position du condensateur sur la roue de bobinage, d'une part, et dont la résistance d'isolement mesurée sous 100 volts continus est supérieure ou égale à 50 Giga Ohms par microfarad, après régénération sous une tension continue de l'ordre de 100 volts/μm d'épaisseur de diélectrique, d'autre part. Les meilleurs résultats, tant du point de vue collage des couches (donc élimination de l'air), que du point de vue résistance d'isolement, sont obtenues par un taux de l'ordre de 100 ppm.

L'invention concerne également un procédé de fabrication de condensateurs à partir d'un film revêtu d'une couche métallique de bandes métallisées et de bandes de laque sur une seule de ses faces telles que définies ci-dessus, procédé dans lequel on découpe ledit film selon les plans médians perpendiculaires aux bandes métallisées ainsi que selon les plans médians perpendiculaires aux bandes de laque de manière à obtenir une pluralité de films élémentaires constitués d'une portion de film recouverte partiellement d'une bande métallisée ne s'étendant que jusqu'à l'un des bords de la portion de film, celle-ci étant partiellement recouverte d'une bande de laque ne s'étendant que jusqu'à l'autre bord de la portion de film, en ce que l'on réalise un empilement de deux films élémentaires successifs découpés dans le film, puis en ce que l'on relie électriquement entre elles respectivement les bandes métallisées de rang pair et celles de rang impair par projection de métal sur les faces latérales correspondantes de l'empilement.

Selon une variante dans laquelle on utilise le film métallisé et laqué sur les deux faces telles que définies ci-dessus, ledit procédé selon l'invention consiste à découper ce film le long des plans médians perpendiculaires aux bandes métallisées ainsi que le long des plans médians perpendiculaires aux bandes de laque, puis à superposer ces films de manière à former un empilement desdits films présentant alternativement une couche métallisé affleurant sur l'une des faces latérales de l'empilement et une couche métalisée affleurant sur l'autre face latérale dudit empilement, puis à schooper l'empilement ainsi réalisé. Un avantage de l'utilisation d'un tel film métallisé et laqué sur les deux faces est constitué par le fait que l'on peut utiliser un seul film, bobiné sur lui-même, pour réaliser des condensateurs de type feuilletés ou bobinés. Toutefois, il est possible d'utiliser plusieurs de ces films simultanément.

Dans les deux cas, le procédé selon l'invention comporte également une étape de traitement thermique permettant en outre aux couches de laque d'adhérer sur elles-mêmes ou sur les couches de film diélectrique, ladite étape étant située après l'étape de schoopage de l'empilement. Un tel traitement thermique est indispensable, d'une part pour chasser l'air compris entre les couches et d'autre part assurer le collage desdites couches, de manière à obtenir une résistance d'isolement telle que définie plus haut.

Lorsque cet empilement conduit à la réalisation d'un condensateur-mère, celui-ci est ensuite découpé en condensateurs élémentaires perpendiculairement aux schoopages latéraux.

L'invention sera mieux comprise à l'aide des exemples de réalisation suivants, données à titre non limitatif, conjointement avec les figures qui représentent:
– la figure 1, une vue en perspective d'un film métallisé sur une seule face selon l'invention,
– la figure 2, une vue en coupe d'un condensateur réalisé à partir d'un film de la figure 1,
– la figure 3, une vue en coupe d'un film métallisé selon l'invention comportant des bandes métallisées et des bandes de laque sur ces deux faces,
– la figure 4, une vue en coupe d'un condensateur réalisé à partir d'un film de la figure 3.

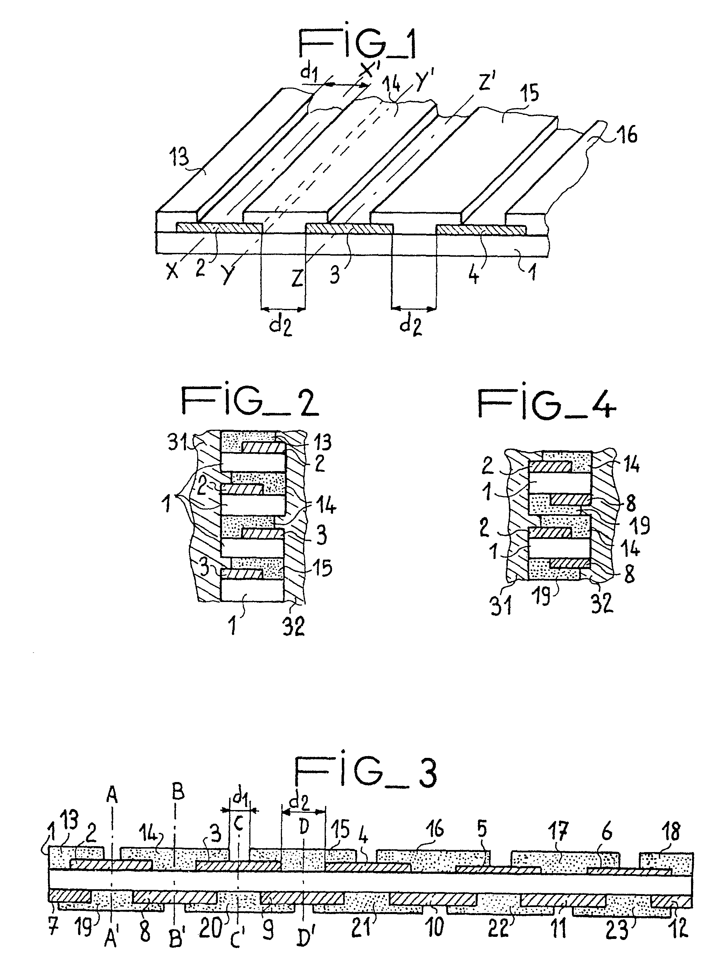

Sur la figure 1, est représentée une vue en perspective d'un film métallisé et laqué sur une seule face selon l'invention. A partir d'un film souple support diélectrique 1 tel que, par exemple un film de polyester, polycarbonate, polystyrène, etc..., on a déposé des bandes métallisées 2, 3 et 4 s'étendant parallèlement les unes aux autres et distantes respectivement d'une valeur $d_2$. Ce dépôt de bandes métallisées s'effectue de manière connue en soi par métallisation par exemple dans un appareil sous vide, les bandes sans métallisation étant obtenues par masquage (cache, huile, etc...). Sur le film métallisé ainsi obtenu, on dépose ensuite par tous moyens adaptés (enduction, héliogravure, etc...) des couches de laque diélectriques 13, 14, 15 et 16. Cette laque doit avoir d'une part de bonnes propriétés diélectriques (mais ce n'est pas sa qualité essentielle lorsque le film est laqué sur une seule face ainsi qu'on le verra par la suite) et posséder également la propriété d'adhérer au film support 1. Cette adhérence peut être soit du type par fusion, soit du type par pression. Les bandes de laque ainsi déposées sont disposées parallèlement aux bandes métallisées décalées par rapport à elles et distantes respectivement de $d_1$. De préférence, les bandes de laque telles que 13 et 14 seront disposées symétriquement par rapport au plan médian de la bande métallisée 2 et inversement, les bandes métallisées 2 et 3 seront disposées symétriquement par rapport au plan médian de la bande de laque 14.

Sur la figure 2, est représenté un condensateur obtenu à partir d'un film tel que décrit sur la figure 1. Le film de la figure 1 est découpé selon les plans médians XX' de la bande métallisée 2, YY' de la bande de laque 14, ZZ' de la bande métallisée 3, etc. . . Deux films adjacents sont ensuite superposés de manière à obtenir, ainsi que représenté sur la figure 2, successivement une portion du film diélectrique 1, une portion de bande métallisée 2, décalée sur la gauche, une portion de la couche de laque 14 décalée sur la droite, une portion du film métallisé 1, une portion de la bande métallisée 2 décalée vers la droite, une portion de la bande de laque 13 décalée vers la gauche, etc. . . Les schoopages latéraus 31 et 32 réalisé par projection de métal sur les flancs de l'empilement connectent ainsi les armatures de même parité, 31 reliant entre elles les armatures décalées vers la gauche tandis que 32 reliant entre elles les armatures décalées vers la droite.

Sur la figure 3, est représentée une variante préférentielle du film selon l'invention. Sur cette figure, les mêmes éléments que ceux des figures précédentes portent les mêmes références. Outre les couches métallisées et les couches de laque disposées sur la face supérieure du film diélectrique 1 (voir figure 1), celui-ci comporte sur sa partie inférieure une pluralité de bandes métallisées 7, 8, 9, 10, 11, 12 séparées les unes des autres par une distance $d_2$ également, bandes métallisées elles-même recouvertes partiellement par des bandes de laque 19, 20, 21, 22 et 23. La répartition des couches métallisées et des couches de laque est la même qu'sur l'autre face. Toutefois, les couches métallisées de la face inférieure du film 1 sont décalées par rapport à celles de la face supérieure de même que les bandes de laque, de telle sorte que les plans médians AA', CC', etc. . . des bandes métallisées 2, 3 etc. . . situées sur la face supérieure du film, soient également les plans médians des couches de laque 19, 20, etc. . . situées sur la face inférieure du film. Inversement, les plans médians BB', DD', etc. . . des couches de laque 14, 15, etc. . . situées sur la face supérieure du film 1 sont les mêmes que ceux des couches métallisées 8 et 9 situées sur la face inférieure du film 1. De cette manière, et après découpage selon les plans médians AA', BB', CC', DD', etc. . . du film tel que représenté sur la figure 3, on obtient par simple empilement de ces films sur eux-mêmes un condensateur tel que représenté sur la figure 4. Un tel condensateur est donc particulièrement simple à réaliser puisque par superposition du film sur lui-même, on obtient directement sous forme bobinée et/ou empilée, un condensateur qui peut être schoopé de manière à réunir entre elles les armatures de même parité puis éventuellement découpé en condensateurs élémentaires, à partir d'un condensateur-mère.

On supprime ainsi le problème de repérage des marges non métallisées (ou le décalage relatif) qui se pose lors de la fabrication par enroulement de deux films de matière plastique métallisée.

## Revendications

1. Film métallisé pour la réalisation de condensateur du type constitué par des supports souples comportant sur l'une au moins de ses faces des bandes parallèles métallisées (2, 3, . . . 6) partiellement recouvertes par des bandes de laque (13, 14, . . . 18) parallèles aux précédentes, deux bandes métallisées successives (3, 4) étant recouvertes partiellement par une couche de laque (15), tandis que deux bandes de laque successives (14, 15) recouvrent partiellement une même bande métallisée (3), caractérisé en ce que les supports souples sont constitués par un seul film diélectrique, en ce que les bandes métallisées sont d'épaisseur uniforme et en ce que la laque comporte un taux de solvant résiduel compris entre 10 et 500 ppm par rapport au poids de diélectrique contenu dans celle-ci.

2. Film métallisé selon la revendication 1, caractérisé en ce que les bandes de laque (13, 14, . . . 18) sont disposées symétriquement par rapport aux plans médians (AA', BB', . . .) des bandes métallisées (2, 3, . . . 6).

3. Film métallisé selon l'une des revendications 1 ou 2, caractérisé en ce qu'il comporte des couches métallisées (2, 3, . . . 12) recouvertes de couches de laque (13, 14, . . . 23) sur les deux faces du film diélectrique souple (1).

4. Film métallisé selon la revendication 3, caractérisé en ce que les bandes métallisées (2, 3, . . . 6) sur l'une des faces du film (1) sont latéralement décalées par rapport à celles (8, 9, . . . 11) de l'autre face du film (1).

5. Film métallisé selon la revendication 4, caractérisé en ce que les bandes métallisées (2, 3, . . . 6) sur l'une des faces du film (1) sont disposées symétriquement par rapport aux plans médians (BB', DD', . . .) perpendiculaires à chaque bande métallisée (8, 9, . . . 11) de l'autre face du film (1).

6. Film métallisé selon la revendication 5, caractérisé en ce que les bandes de laque (14, 15, . . . 17) sur l'une des faces du film (1) sont disposées symétriquement par rapport au plan médian (AA', CC', . . .) perpendiculaire à chaque bande de laque (19, 20, . . . 23) de l'autre face du film (1).

7. Film métallisé selon la revendication 6, caractérisé en ce que le plan médian (BB') d'une couche de laque (14) sur l'une des faces du film (1) est le même que celui d'une couche métallisée (8) disposée sur l'autre face.

8. Procédé de fabrication de condensateurs, comportant les étapes suivantes:
   – réalisation d'un film métallisé laqué obtenu par dépôt sur l'une au moins des faces d'un film diélectrique d'une pluralité de bandes parallèles métallisées (2, 3, . . . 6), qui sont ensuite partiellement recouvertes par des bandes de laques déposées parallèlement aux bandes métallisées mais latéralement décalées par rapport à celles-ci de manière à créer des bandes non laquées sur les bandes métallisées et des bandes non métallisées sous les bandes de laque, l'étape de laquage, consistant en l'enduction d'une solution d'un diélectrique dans un solvant, étant suivie par une étape de séchage, dont les paramètres de température et de durée sont déterminés, suivant la laque utilisée, de telle sorte que ladite couche de laque comporte, à la fin de cette étape de séchage un taux de solvants résiduels compris entre 10 et 500 ppm par rapport au poids de diélectrique,

– découpage du film métallisé laqué en films individuels comportant sur l'une au moins des faces du film diélectrique une couche métallisée et une marge non métallisée sur son premier bord, l'ensemble étant revêtu d'une couche de laque ne s'étendant pas jusqu'au second bord de façon à former une marge non laquée sur le second bord, les couches métallisées disposées sur les deux faces du films diélectrique comportant une marge placée sur le premier bord pour l'une et sur le second bord, pour l'autre et vice-versa pour les marges des couches de laque,

– bobinage de chaque film individuel, seul ou conjointement avec au moins un autre film individuel, le condensateur ainsi formé étant ensuite soumis à une étape de traitement thermique, avant et/ou après schoopage des flancs latéraux du condensateur, de manière à éliminer l'air emprisonné dans le condensateur au cours du bobinage, d'une part, et à coller les couches de laques l'une sur l'autre ou sur le film diélectrique, d'autre part, de façon à obtenir des condensateurs individuels dont la résistance d'isolement, mesurée sous 100 volts continus, après une étape de régénération sous une tension continue de l'ordre de 100 V/micron d'épaisseur de diélectrique, soit supérieure ou égale à 50 Giga Ohms par microfarad.

9. Procédé selon la revendication 8, caractérisé en ce que le taux de solvant résiduel après l'étape de séchage est de l'ordre de 100 ppm.

10. Procédé selon les revendications 8 ou 9, dans lequel les condensateurs sont réalisés par bobinage sur une roue de grand diamètre, puis séparés en condensateurs individuels, caractérisé en ce que l'on n'utilise qu'on seul film métallisé et laqué recto-verso, les couches métallisées disposées sur les deux faces du film diélectrique comportant une marge placée sur le premier bord pour l'une et sur le second bord pour l'autre et vice-versa pour les marges des couches de laque.

**Patentansprüche**

1. Metallisierte Folie für die Herstellung von Kondensatoren, die aus biegsamen Trägern mit auf mindestens einer ihrer Seiten aufgebrachten parallelen Metallbändern (2, 3, . . . 6), die teilweise von zu den vorgenannten Bändern parallelen Lackbändern (13, 14, . . . 18) bedeckt sind, wobei zwei aufeinanderfolgende Metallbänder (3, 4) teilweise von einer Lackschicht (15) bedeckt sind, während zwei aufeinanderfolgende Lackbänder (14, 15) teilweise ein gleiches Metallband (3) überdecken, dadurch gekennzeichnet, dass die biegsamen Träger aus einer einzigen dielektrischen Folie gebildet werden, dass die Metallbänder eine gleichmässige Dicke besitzen und dass der Lack einen Restanteil an Lösungsmittel zwischen 10 und 500 ppm bezüglich des Gewichts des im Lack enthaltenen Dielektrikums besitzt.

2. Metallisierte Folie nach Anspruch 1, dadurch gekennzeichnet, dass die Lackbänder (13, 14, . . . 18) symmetrisch bezüglich der Mittelebenen (AA', BB', . . .) der Metallbänder (2, 3, . . . 6) angeordnet sind.

3. Metallisierte Folie nach einem der Ansprüche 1 oder 2, dadurch gekennzeichnet, dass sie metallisierte Schichten (2, 3, . . . 12), die von Lackschichten (13, 14, . . . 23) bedeckt sind, auf den beiden Seiten der biegsamen dielektrischen Folie (1) aufweist.

4. Metallisierte Folie nach Anspruch 3, dadurch gekennzeichnet, dass die Metallbänder (2, 3, . . . 6) auf einer der Seiten der Folie (1) bezüglich der Bänder (8, 9, . . . 11) auf der anderen Seite der Folie (1) seitlich versetzt sind.

5. Metallisierte Folie nach Anspruch 4, dadurch gekennzeichnet, dass die Metallbänder (2, 3, . . . 6) auf einer Seite der Folie (1) symmetrisch bezüglich der Mittelebenen (BB', DD', . . .) angeordnet sind, die senkrecht zu jedem Metallband (8, 9, . . . 11) auf der anderen Seite der Folie (1) verlaufen.

6. Metallisierte Folie nach Anspruch 5, dadurch gekennzeichnet, dass die Lackbänder (14, 15, 17) auf einer der Seiten der Folie (1) symmetrisch bezüglich der Mittelebene (AA', CC', . . .) angeordnet sind, die senkrecht zu jedem Lackband (19, 20, . . . 23) auf der anderen Seite der Folie (1) verläuft.

7. Metallisierte Folie nach Anspruch 6, dadurch gekennzeichnet, dass die Mittelebene (BB') einer Lackschicht (14) auf einer der Seiten der Folie (1) dieselbe Ebene wie die Mittelebene einer metallisierten Schicht (8) auf der anderen Seite ist.

8. Verfahren zur Kondensatorherstellung, das folgende Schritte umfasst:

– Herstellung einer metallisierten und lackierten Folie durch Aufbringen einer Vielzahl paralleler Metallbänder (2, 3, . . . 6) auf mindestens eine Seite einer dielektrischen Folie, die anschliessend teilweise von parallel zu den Metallbändern aufgebrachten, aber seitlich diesen gegenüber verschobenen Lackbändern bedeckt werden, sodass unlackierte Bänder auf den Metallbändern und nicht metallisierte Bänder unter den Lackbändern gebildet werden, wobei das Lackieren darin besteht, dass eine Lösung eines Dielektrikums in einem Lösungsmittel eingelassen wird, worauf eine Trocknung durchgeführt wird, deren Temperatur- und Zeitparameter nach dem gewählten Lack bestimmt werden, so dass die Lackschicht am Ende dieses Trocknungsschrittes einen Anteil an Restlösungsmittel zwischen 10 und 500 ppm bezüglich des Gewichts des Dielektrikums besitzt,

— Zerschneiden der matallisierten und lackierten Folie in Einzelfolien, die auf mindestens einer der Seiten der dielektrischen Folie eine metallisierte Schicht und einen nicht-metallisierten Randbereich am ersten Rand besitzen, wobei das Ganze mit einer Lackschicht abgedeckt wird, die sich nicht bis zum zweiten Rand erstreckt, so dass ein unlackierter Randbereich an diesem zweiten Rand gebildet wird, wobei die metallisierten Schichten, die auf die beiden Seiten der dielektrischen Folie aufgebracht werden, einen Randbereich besitzen, der am ersten Rand für den einen Randbereich und am zweiten Rand für den anderen und entsprechend umgekehrt für die Randbereiche der Lackschicht liegt,

— Wickeln jeder individuellen Folie, allein oder zugleich mit mindestens einer weiteren individuellen Folie, worauf der so gebildete Kondensator einer Wärmebehandlung unterzogen wird, und zwar vor und/oder nach einem Shooping der seitlichen Flanken des Konsensators, so dass einerseits die im Kondensator während des Wickelns eingeschlossene Luft entfernt wird und andererseits die Lackschichten aufeinander und auf der dielektrischen Folie festkleben, so dass individuelle Kondensatoren gebildet werden, deren Isolationswiderstand bei einer Messung unter 100 V Gleichspannung nach einem Regenerationsschritt unter Gleichspannung der Grössenordnung 100 Volt pro Mikrometer Dicke des Dielektrikums grösser oder gleich 50 GΩ/µF ist.

9. Verfahren nach Anspruch 8, dadurch gekennzeichnet, dass der Anteil an Restlösungsmittel nach dem Trocknen bei etwa 100 ppm liegt.

10. Verfahren nach Anspruch 8 oder 9, in dem die Kondensatoren durch Wickeln auf ein Rad grossen Durchmessers und dann durch Trennung in individuelle Kondensatoren hergestellt werden, dadurch gekennzeichnet, dass man nur eine einzige auf beiden Seiten metallisierte und lackierte Folie verwendet, wobei die auf den beiden Seiten der dielektrischen Folie angeordneten metallisierten Schichten einen Randbereich besitzen, der für die eine Schicht am ersten Rand und für die andere am zweiten Rand sowie entsprechend umgekehrt für die Randbereiche der Lackschichten angeordnet ist.

## Claims

1. A metallized film for realizing capacitors of the type constituted by resilient supports comprising on at least one of its surfaces parallel metallized strips (2, 3, . . . 6), which are partially covered by varnish strips (13, 14, . . . 28) disposed parallelly to the metallized strips, two successive metallized strips (3, 4) being partially covered by a varnish layer (15) while two successive varnish strips (14, 15) partially cover a common metallized strip (3), characterized in that the resilient supports are constituted by a unique dielectric film, that the metallized strips have a uniform thickness and that the varnish comprises a rate of residual solvent between 10 and 500 ppm with respect to the weight of the dielectric contained therein.

2. A metallized film according to claim 1, characterized in that the varnish strips (13, 14, . . . 18) are disposed symmetrically with respect to central planes (AA', BB', . . .) of the metallized strips (2, 3, . . . 6).

3. A metallized film according to one of claim 1 or 2, characterized in that it comprises metallized layers (2, 3, . . . 12) coated by vernish layers (13, 14, . . . 23) on both surfaces of the resilient dielectric film (1).

4. A metallized film according to claim 3, characterized in that the metallized strips (2, 3, . . . 6) on one of the surfaces of the film (1) are laterally shifted with respect to the strips (8, 9, . . . 11) disposed on the other surface of the film (1).

5. A metallized film according to claim 4, characterized in that the metallized strips (2, 3, . . . 6) on one surface of the film (1) are disposed symmetrically with respect to central planes (BB', DD', . . .) which are perpendicular to each metallized strip (8, 9, . . . 11) on the other surface of the film (1).

6. A metallized film according to claim 5, characterized in that the varnish strips (14, 15, . . . 17) on one surface of the film (1) are disposed symmetrically with respect to a central plane (AA', CC', . . .) which is perpendicular to each varnish strip (19, 20, . . . 23) on the other surface of the film (1).

7. A metallized film according to claim 6, characterized in that the central plane (BB') of one varnish layer (14) on one surface of the film (1) is the same as that of a metallized layer (8) disposed on the other surface.

8. A method of manufacturing capacitors comprising the following steps:
— realizing a metallized ans vernished film obtained by depositing a plurality of metallized parallel strips (2, 3, . . . 6) on at least one of the surfaces of a dielectric film, these strips being thereafter partially coated by varnish strips deposited parallelly to the metallized strips but laterally shifted with respect thereto such that strips without varnish covering are created on the metallized strips and strips without metall coating are created under the varnish strips, the varnishing step, which consists in inducing with a solution of a dielectric material in a solvent being followed by a drying step, the temperature and time parameters of which are predetermined according to the selected varnish such that, at the end of the drying step, said varnish layer comprises a rate of residual solvent between 10 and 500 ppm with respect to the weight of the dielectric material,
— cutting the metallized and varnished film into individual films which comprise on at least one surface of the dielectric film a metallized layer and a non-metallized margin on its first edge, the assembly being coated by a varnish layer which does not extend up to the second edge, such that a margin without varnish is created on the second edge, the metallized layers disposed on both surfaces of the dielectric film comprising a margin disposed on the first edge for one layer and on the second edge for the other and vice versa for the margins of the varnish layers,

- rolling of each individual film, alone or together with at least one further individual film, the capacitor thus formed being then submitted to a thermal treatment step prior to and/or after shooping of the side flanks of the capacitor such that, one the one hand, air which has been emprisoned in the capacitor during the rolling step is eliminated, and on the other hand, the varnish layers are glued one onto the other and onto the dielectric film, such that individual capacitors are obtained, the insulation resistance measured under 100 V DC after a regeneration step under a DC voltage of about 100 V/µm thickness of the dielectric material exceeding or being equal to 50 GΩ/µF.

9. A method according to claim 8, characterized in that the rate of residual solvent after the drying step is about 100 ppm.

10. A method according to claims 8 or 9, in which the capacitors are realized by rolling on a wheel of large diameter, then by separation into individual capacitors, characterized in that only one film is used, which is metallized and varnished on both sides, the metallized layers disposed on both surfaces of the dielectric film comprising a margin placed on the first edge for one layer and on the second edge for the other and vice versa for the margins of the varnish layers.

# FIG_1

$d_1$ X' 14 Y' Z' 15 16

13

X 2 Y Z 3 4 1

$d_2$ $d_2$

# FIG_2

31 13
2
2
1 14
1
3
3 15

1 32

# FIG_4

2 14
1 8
2 19
1 14
8

31 19 32

# FIG_3

A B $d_1$ $d_2$
C D
1 13 2 14 3 15 4 16 5 17 6 18

7 19 A' 8 B' 20 C' 9 D' 21 10 22 11 23 12